# EUROPEAN PATENT APPLICATION

(11) **EP 4 429 043 A1**
(43) Date of publication of application: **11.09.2024**
(21) Application number: 23788534.8
(22) Date of filing: 06.04.2023
(51) Int. Cl.: H01R 13/642, H01R 13/62, H01R 4/58, H01R 43/16, H01R 107/00

(54) **BATTERY PACK CONNECTOR TO BE CONNECTED TO EXTERNAL DEVICE**

(30) Priority: 11.04.2022 KR 20220044721
(71) Applicant: LG Energy Solution, Ltd., Seoul 07335 (KR)
(72) Inventor: KIM, Hak Soon, Daejeon 34122 (KR); HWANG, Jo Yeon, Daejeon 34122 (KR); LEE, Jin Hyun, Daejeon 34122 (KR)
(74) Representative: Plasseraud IP
(86) International application number: PCT/KR2023/004670
(87) International publication number: WO 2023/200183

(57) **Abstract**

One aspect of the present disclosure is related to a battery pack including a plurality of battery cells, a positive (+) conductive plate configured to electrically connect the plurality of battery cells to each other which comprises a positive (+) output terminal, a negative (-) conductive plate configured to electrically connect the plurality of battery cells to each other which comprises a negative (-) output terminal, and a battery pack connector configured to be connected to the positive (+) and negative (-) conductive plates to an external device.

## Description

### TECHNICAL FIELD

The present disclosure relates to a battery pack connector connected to an external device, and more particularly, to a structure of a battery pack connector capable of preventing an IC malfunction of a battery from occurring when the battery pack connector is coupled to an external device.

### BACKGROUND ART

An emergency phone system (hereinafter, referred to as an 'E-call system') that automatically makes an emergency call when serious collision to a vehicle is detected, or passengers directly call to report an emergency situation and request rescue in the event of the emergency situation has been developed.

The E-call system operates by a battery that is installed in the vehicle to supply power. However, if a battery limitation occurs in the emergency situation such as a car accident, the supply of the power to the E-call system may not be smooth. In preparation for such a situation, a separate E-call system battery is used

A connector applied to the battery for the E-call system generally employs a reverse insertion prevention structure when male/female coupling, but is not implemented in terms of electrical stability through contact of a ground wire.

Thus, when the battery pack and the external device are coupled to each other, a GND pin (negative (-) pin) of the battery pack may not be in line contact with a connector of the external device. In this case, the ground GND is electrically shaken to cause a malfunction of a battery management IC.

A related art document related to this limitation is as follows.

JP 2007-280872 A

### DISCLOSURE OF THE INVENTION

### TECHNICAL PROBLEM

The present disclosure provides a structure of a battery pack connector disposed so that a negative (-) pack pin is precedes a positive (+) pack pin so as to be in contact with a connector of an external device when the external device is connected.

### TECHNICAL SOLUTION

In accordance with an aspect of the present disclosure, a battery pack may include a plurality of battery cells, a positive (+) conductive plate configured to electrically connect the plurality of battery cells to each other to constitute a positive (+) output terminal, a negative (-) conductive plate configured to electrically connect the plurality of battery cells to each other to constitute a negative (-) output terminal, and a battery pack connector connected to the positive (+) and negative (-) conductive plates, and to an external device.

The battery pack connector may include a positive (+) pack pin having one end connected to the positive (+) conductive plate, and another end connected to a connector of the external device, and a negative (-) pack pin having one end connected to the negative (-) conductive plate and another end connected to the connector of the external device.

The negative (-) pack pin of the battery pack connector may be configured to protrude further than the positive (+) pack pin so that, when connected to the external device, the negative (-) pack pin is electrically connected to the connector of the external device prior to the positive (+) pack pin.

The battery pack connector may further include an application pin connected to a temperature detection element, wherein the application pin may be configured to protrude further than the positive (+) pack pin and is configured to correspond with the negative (-) pack pin.

The battery pack may further include that the negative (-) pack pin of the battery pack connector has a same length as the positive (+) pack pin, and wherein a conductor pattern within the negative (-) pack pin is configured to protrude further than a conductor pattern within the positive (+) pack pin so that, when connected to the external device, the negative (-) pack pin is electrically connected to the connector of the external device prior to the positive (+) pack pin.

In accordance with aspect of the present disclosure, a battery pack connector configured to electrically connect a battery pack to an external device may include an insulating base substrate, and a plurality of pins disposed on the insulating base substrate to provide an electric connection path together with the external device, wherein the plurality of pins includes a positive (+) pack pin connected to a positive (+) output terminal of the battery pack, and a negative (-) pack pin connected to a negative (-) output terminal of the battery pack.

One end of a conductive pattern of the positive (+) pack pin toward the external device may have a length less than that of one end of a conductive pattern of the negative (-) pack pin toward the external device.

The battery pack connector may further include an application pin connected to a temperature detection element, wherein the application pin may have a length larger than a length of the one end of the positive (+) pack pin toward the external device, and wherein the length of the application pin corresponds with a length of the negative (-) pack pin.

The negative (-) pack pin has a same length as a length of the positive (+) pack pin, and wherein a conductive pattern within the positive (+) pack pin extends is configured to be elongated further than a conductive pattern within the positive (+) pack pin so that, when connected to the external device, the negative (-) pack pin is electrically connected to the battery pack connector of the external device prior to the positive (+) pack pin.

In accordance with yet another aspect of the present disclosure, a method for manufacturing a battery pack may include a battery cell connection process of electrically connecting a plurality of battery cells using a conductive plate, and a battery pack connector formation process of disposing a plurality of connection pins for forming an electrical connection path together with an external device on an insulating base substrate.

The battery cell connection process may further include a positive (+) output terminal formation process of electrically connecting the plurality of battery cells to each other using a positive (+) conductive plate to form a positive (+) output terminal, and a negative (-) output terminal formation process of electrically connecting the plurality of battery cells to each other using a negative (-) conductive plate to form a negative (-) output terminal.

The battery pack connector formation process may further include a negative (-) pack pin connection process of connecting a negative (-) pack pin of the battery pack connector to the negative (-) output terminal of the battery pack, and a positive (+) pack pin connection process of connecting a positive (+) pack pin of the battery pack connector to the positive (+) output terminal of the battery pack.

One end of a conductive pattern of the positive (+) pack pin toward the external device may have a smaller length than a length of one end of a conductive pattern of the negative (-) pack pin toward the external device.

### ADVANTAGEOUS EFFECTS

In accordance with the exemplary embodiment, when the external device and the battery pack are coupled to each other, the negative (-) pack pin of the battery pack connector may precede the positive (+) pack pin of the battery pack connector so as to be in contact with the connector of the external device, thereby preventing the non-contact of the ground wire from occurring.

Therefore, the malfunction of the battery management IC due to the separate operator's insertion operation may be prevented to improve the safety of the battery pack.

### BRIEF DESCRIPTION OF THE DRAWINGS

FIG. 1 is a perspective view illustrating a battery pack and an external device connector in accordance with an exemplary embodiment.
FIG. 2 is a top plan view illustrating a coupling state between an external connection terminal of a battery pack and an external device connector in accordance with a related art.
FIG. 3 is a top plan view illustrating a coupling state between an external connection terminal of a battery pack and an external device connector in accordance with an exemplary embodiment.
FIG. 4 is a top plan view illustrating a coupling state between an external connection terminal of a battery pack and an external device connector in accordance with another exemplary embodiment.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

Hereinafter, exemplary embodiments of the present disclosure will be described with reference to the accompanying drawings.

### 1. Battery pack in accordance with exemplary embodiment

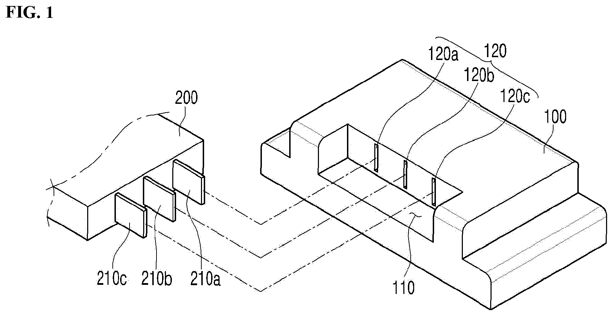

FIG. 1 is a perspective view illustrating a battery pack and an external device connector in accordance with an exemplary embodiment.

Referring to FIG. 1, connection between a battery pack 100 and an external device connector 200 has a structure into which a connector pin 210 of the external device connector 200 corresponding to a pin insertion hole 120 defined in a connection groove 110 is inserted. When the connector pin 210 is inserted, the positive (+) and negative (-) pins of the battery pack and the connector pin 210 of the external device connector 200 are in contact with each other to provide an electrical connection path between the battery pack 100 and an external device (not shown).

Although not shown in FIG. 1, a plurality of battery cells and positive (+) and negative (-) conductive plates that electrically connect the battery cells to each other to respectively constitute positive (+) and negative (-) terminals are provided in the battery pack 100. The positive (+) and negative (-) conductive plates may be provided as nickel plates, and a PTC element may be interposed between the positive (+) and negative (-) terminals of the battery cell and the positive (+) and negative (-) conductive plates.

Although a case in which three pin insertion holes 120 and three connector pins 210 are illustrated in FIG. 1, it is obvious to those skilled in the art that various numbers may be provided depending on the type/shape of application.

The shape of the battery pack illustrated in FIG. 1 is merely an example and is not limited thereto. For example, the battery pack may be implemented in other shapes. The configuration indicated by reference numeral 100 in FIG. 1 described above may not necessarily have to be configured as a structure including the battery pack, and the device indicated by reference numeral 100 may be the battery pack connector 100 connected to a separate battery pack (not shown).

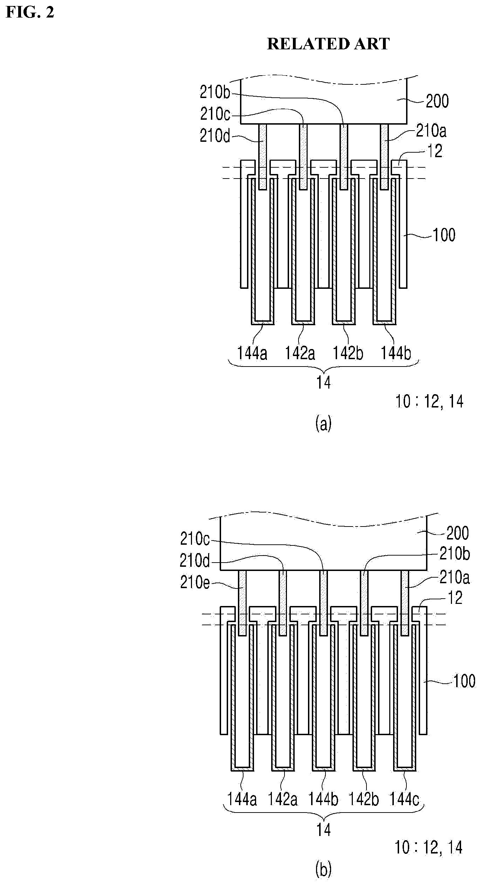

FIG. 2 is a top plan view illustrating a coupling state between an external connection terminal of a battery pack and an external device connector in accordance with a related art. FIG. 2(a) illustrates a case in which the battery pack includes four connector pins, and FIG. 2(b) illustrates a case in which the battery pack includes five connector pins.

As illustrated in FIG. 2, the battery pack connector 10 in accordance with the related art includes a plurality of connection pins 14 (142a, 142b, 144a, 144b, and 144c) forming an electrical connection path with an external device on an insulating base substrate 12. Here, positive (+) pines 144 (144a, 144b, and 144c) and negative (-) pins 142 (142a and 142b), which constitute the plurality of connection pins 14, may have the same length. In this structure, when coupled to an external device connector 200, a connector pin 210 of the external device connector 200 is not in contact with a negative (-) pack pin 142 (GND pin) of the battery pack connector 120 prior to a positive (+) pack pin 144, and thus, the GND pin may be electrically shaken due to operator's insertion to cause a malfunction of a battery management IC.

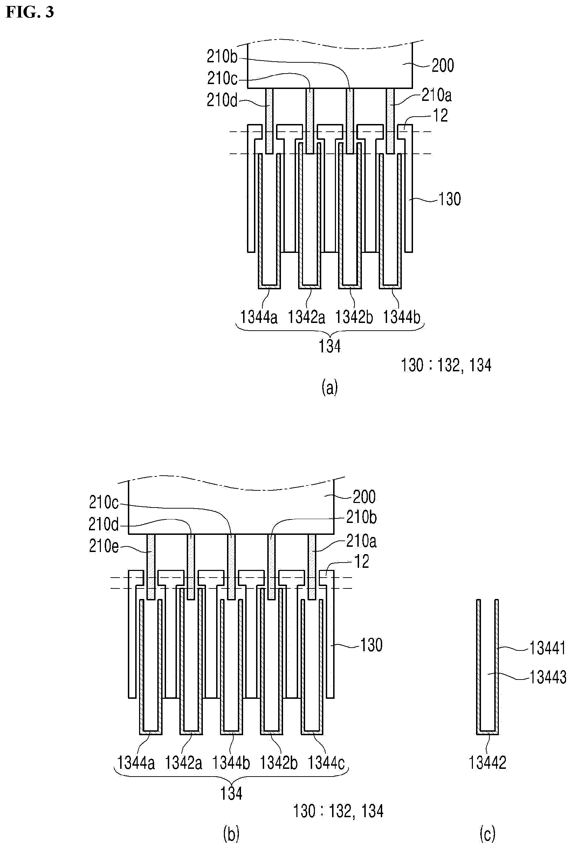

FIG. 3 is a top plan view illustrating a coupling state between an external connection terminal of a battery pack and an external device connector in accordance with an exemplary embodiment. FIG. 3(a) illustrates a case in which a battery pack includes four connector pins, FIG. 3(b) illustrates a case in which a battery pack includes five connector pins, and FIG. 3(c) illustrates an enlarged structure of one connector pin of a battery pack.

As illustrated in FIG. 3, a battery pack connector 130 includes a plurality of connection pins 134 defining an electrical connection path with an external device on an insulating base substrate 132. Here, unlike the related art, positive (+) pack pins 1344 (1344a, 1344b, and 1344c) and negative (-) pack pins 1342 (1342a and 1342b), which constitute a plurality of connection pins 134, have lengths different from each other.

As illustrated in FIG. 3(c), the plurality of connection pins have a shape of a female terminal and have a structure in which external device connector pins 210 are inserted and electrically connected to each other.

More specifically, the plurality of connection pins have the negative (-) pack pins 1342a and 1342b further protrude and extend than the positive (+) pack pins 1344a, 1344b and 1344c. That is to say, one end of the conductive pattern of the positive (+) pack pins 1344a and 1344b toward the external device may have a length less than that of one end of the conductive pattern of the negative (-) pack pin toward the external device. Due to this structure, when the battery pack 100 and an external device (not shown) are coupled to each other, the negative (-) pack pins 1342a and 1342b may be in contact with the connector pin 210 of the external device connector 200 prior to the positive (+) pack pins 1344a, 1344b, and 1344c.

That is, each of the connector pins 210 (210a, 210b, 210c, and 210d) of the external device connector 200 may proceed downward in the drawing and is inserted into an insertion space of one pack pin. As illustrated in FIG. 3, since ends of the negative (-) pack pins 1342a and 1342b extend upward in the drawing, the connector pins 210b and 210c are electrically connected prior to the connector pins 210a and 210b.

Here, as illustrated in FIG. 3(c), each of the connection pins 134 may be configured in a form in which a conductor pattern 13441 provided as a conductor is provided with a connector pin accommodation part 13443, and a connection part 1344 disposed at a lower end becomes a connection part electrically connected to battery cells provided in the battery pack. The external device connector pins 210 may be inserted into the battery pack connector 130 through the pin insertion hole, and as the insertion more proceeds, side surfaces of the connector pins 210 may be inserted into the connector pin accommodation part 13443 between the conductor patterns 13441 of the connection pins 134 and then be in contact with an inner surface of the conductor pattern 13441 so as to first connected to the negative pack (-) pins 1342a and 1342b.

Thus, when the battery pack in accordance with the related art is connected to the external device, the negative (-) pack pin (GND pin) of the battery pack may not be in line contact to prevent the malfunction of the battery management IC from occurring.

Although not shown in the drawing, the battery pack connector 130 in accordance with an exemplary embodiment may further include an application pin (not shown) connected to a temperature detection element. An application pin (not shown) has a structure that protrudes and extends with the positive (+) pack pins 1344a, 1344b, and 1344c together with the negative (-) pack pines 1342a and 1342b.

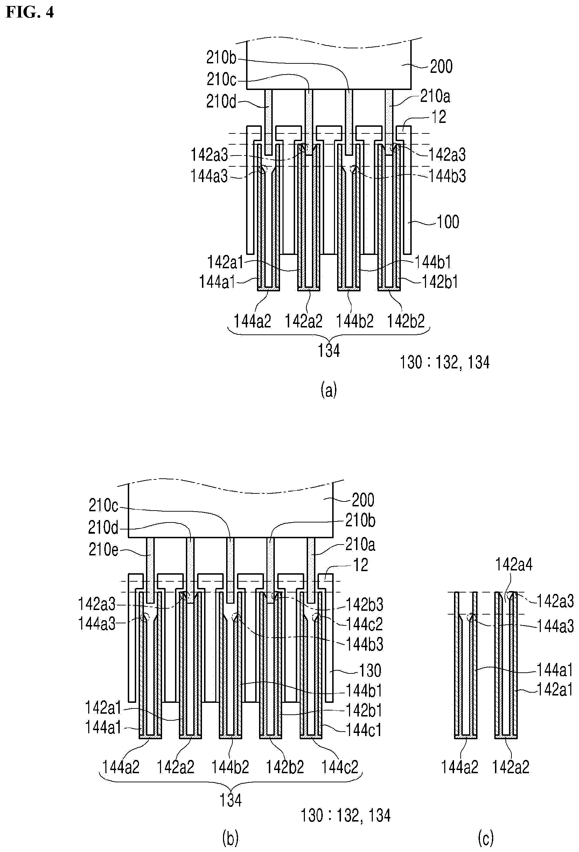

FIG. 4 is a top plan view illustrating a coupling state between an external connection terminal of a battery pack and an external device connector in accordance with another exemplary embodiment. FIG. 4(a) illustrates a case in which a battery pack includes four connector pins, FIG. 4(b) illustrates a case in which a battery pack includes five connector pins, and FIG. 4(c) illustrates structures of a positive (+) pack pin and a negative (-) pack pin, which constitute the components illustrated in FIGS. 4(a) and 4(b).

Battery pack connectors 140 (142 and 144) are provided with a plurality of connection pins 144 providing an electrical connection path with an external device on an insulating base substrate 142. Here, the plurality of connection pins 144 have the same length, but conductor patterns of a positive (+) pack pin and a negative (-) pack pin, which constitute the plurality of connection pins 144, have lengths different from each other.

The connection pins 144 of the pack include pack pin bases 144a1, 144b1, 144c1, 142a1, and 142b1, and conductor patterns 144a2, 144b2, 144c2, 142a2, and 142b2, and each of the conductor patterns is provided in a U shape to define a pin accommodation part 1441 therein.

The pack pin bases 144a1 and 142a1 are provided as non-conductors and support the conductor patterns 144a2 and 142a2 inside the pack pin bases. As described above, external device connector pins 210 are inserted and connected to the pin accommodation part provided between the conductor patterns.

Here, unlike in FIG. 3, all of the pack pin bases have the same height, and thus, the overall height of the pack pins is the same. On the other hand, each of the positive (+) pack pin conductor patterns 144a2, 144b2, and 144c2 disposed on the positive (+) pack pins 144 may have a height less than that of the negative (-) pack pin conductor patterns 142a2 and 142b2. Then, when the external device connector pins 210a to 210e are inserted into pin accommodation parts 14443, respectively, the negative (-) pack pin conductor patterns 142a2 and 142b2 are first connected.

A lower portion of each of the pack pins may be configured to expose the conductor patterns so as to be connected to the positive (+) conductive plate, the negative (-) conductive plate, and the GND pin, and an upper end of each of the conductor patterns may be provided with inclined parts 144a3, 144b3, 144c3, 142a3, and 142b3, each of which has an inclined cross-section, so that the external device connector pins 210 are smoothly inserted.

### 2. Method for manufacturing battery pack in accordance with exemplary embodiment

A method for manufacturing a battery pack in accordance with an exemplary embodiment may include following processes.

### 2.1. A process of connecting battery cells

A process of connecting battery cells is a process of electrically connecting a plurality of battery cells to each other using a conductive plate.

More specifically, the battery cells may be electrically connected to each other by using a positive (+) conductive plate to form a positive (+) output terminal, and the battery cells may be electrically connected to each other by using a negative (-) conductive plate to form a negative (-) output terminal.

### 2.2. A process of forming battery pack connectors

A process of forming a battery pack is a process of forming a battery pack for electrically coupling an external device to a battery pack. Here, a plurality of pack connection pins 134 and 144 for forming an electric connection path together with the external device are disposed on an insulating base substrate 130.

### 2.2.1. A process of connecting a negative (-) pack pin

A process of connecting a negative (-) pack pin is a process of connecting a negative (-) pack pin to the negative (-) output terminal of the battery pack formed through the process of connecting the battery pack. Here, as described above, the negative (-) pack pins 1342a and 1342b are formed to further protrude and extend than the positive (+) pack pins as illustrated in FIG. 3. Thus, when the battery pack 100 and the external device (not shown) are connected to each other, the negative (-) pack pins 1342a and 1342b may be electrically connected to the connector pin 210 of the external device connector 200 prior to the positive (+) pack pins 1344a, 1344b, and 1344c of the battery pack 100.

Also, as illustrated in FIG. 4, the conductor patterns 142a2 and 142b2 of the negative (-) pack pin are formed to be elongated more than the conductor patterns 144a2, 144b2, and 144c2 of the positive (+) pack pin.

### 2.2.2. A process of connecting a positive (+) pack pin

A process of connecting the positive (+) pack pin is a process of connecting a positive (+) pack pin to the positive (+) output terminal of the battery pack formed through the process of connecting the battery pack. Here, in the positive (+) pack pins 1344a, 1344b, and 1344c, as illustrated in FIG. 3, one end of the conductor pattern toward the external device may be less than one end of the conductive pattern of the negative (-) pack pins 1342a and 1342b toward the external device.

In the case of the embodiment of FIG. 4, a length of the negative (-) pack pin is formed as the same as a length of the positive (+) pack pin. After the conductor patterns 142a2 and 142b2 are connected first, each of the conductor patterns 144a2, 144b2, and 144c2 of the positive (+) pack pine are formed to be shorter than each of the conductor patterns 142a2 and 142b2 of the negative (-) pack pin so that the conductive patterns of the positive (+) pack pin are connected first to the external device.

### 2.2.3. A process of connecting an application pin

A process of forming a battery pack connector in accordance with an exemplary embodiment includes a process of connecting an application pin. Although not shown in the drawing, an application pin (not shown) is connected to a temperature detection element (not shown) of the battery pack 100. Here, the application pin (not shown) is formed to further protrude and extend than the positive (+) pack pins 1344a, 1344b, and 1344c together with the negative (-) pack pins 1342a and 1342b.

As described above, the technical idea of the present invention has been specifically described with respect to the above embodiments, but it should be noted that the foregoing embodiments are provided only for illustration while not limiting the present invention. Various embodiments may be provided to allow those skilled in the art to understand the scope of the preset invention, but the present invention is not limited thereto.

Symbols and their names used in the drawings of the present invention are as follows.
100: Battery pack
110: Connection groove
120: Pin insertion hole
130: Battery pack connector
132: Base substrate
134: Connection pin
200: External device connector
210: Connector pin

## Claims

1. A battery pack comprising:
a plurality of battery cells;
a positive (+) conductive plate configured to electrically connect the plurality of battery cells to each other to constitute a positive (+) output terminal;
a negative (-) conductive plate configured to electrically connect the plurality of battery cells to each other to constitute a negative (-) output terminal; and
a battery pack connector connected to the positive (+) and negative (-) conductive plates, and to an external device.

2. The battery pack of claim 1, wherein the battery pack connector comprises:
a positive (+) pack pin having one end connected to the positive (+) conductive plate and another end connected to a connector of the external device; and
a negative (-) pack pin having one end connected to the negative (-) conductive plate and another end connected to the connector of the external device.

3. The battery pack of claim 2, wherein the negative (-) pack pin of the battery pack connector is configured to protrude further than the positive (+) pack pin so that, when connected to the external device, the negative (-) pack pin is electrically connected to the connector of the external device prior to the positive (+) pack pin.

4. The battery pack of claim 3, wherein the battery pack connector further comprises an application pin connected to a temperature detection element,
wherein the application pin is configured to protrude further than the positive (+) pack pin and is configured to correspond with the negative (-) pack pin.

5. The battery pack of claim 2, wherein the negative (-) pack pin of the battery pack connector has a same length as the positive (+) pack pin, and
wherein a conductor pattern within the negative (-) pack pin is configured to protrude further than a conductor pattern within the positive (+) pack pin so that, when connected to the external device, the negative (-) pack pin is electrically connected to the connector of the external device prior to the positive (+) pack pin.

6. A battery pack connector configured to electrically connect a battery pack to an external device, the battery pack comprising:
an insulating base substrate; and
a plurality of pins disposed on the insulating base substrate to provide an electric connection path together with the external device,
wherein the plurality of pins comprise:
a positive (+) pack pin connected to a positive (+) output terminal of the battery pack; and
a negative (-) pack pin connected to a negative (-) output terminal of the battery pack.

7. The battery pack connector of claim 6, wherein one end of a conductive pattern of the positive (+) pack pin toward the external device has a length less than that of one end of a conductive pattern of the negative (-) pack pin toward the external device.

8. The battery pack connector of claim 7, wherein the battery pack connector further comprises an application pin connected to a temperature detection element,
wherein the application pin has a length less than a length of the one end of the positive (+) pack pin toward the external device, and
wherein the length of the application pin corresponds with a length of the negative (-) pack pin.

9. The battery pack connector of claim 6, wherein the negative (-) pack pin has a same length as a length of the positive (+) pack pin, and
wherein a conductive pattern within the positive (-) pack pin extends is configured to be elongated further than a conductive pattern within the positive (+) pack pin so that, when connected to the external device, the negative (-) pack pin is electrically connected to the battery pack connector of the external device prior to the positive (+) pack pin.

10. A method for manufacturing a battery pack, the method comprising:
a battery cell connection process of electrically connecting a plurality of battery cells using a conductive plate; and
a battery pack connector formation process of disposing a plurality of connection pins for forming an electrical connection path together with an external device on an insulating base substrate.

11. The method of claim 10, wherein the battery cell connection process further comprises:
a positive (+) output terminal formation process of electrically connecting the plurality of battery cells to each other using a positive (+) conductive plate to form a positive (+) output terminal; and
a negative (-) output terminal formation process of electrically connecting the plurality of battery cells to each other using a negative (-) conductive plate to form a negative (-) output terminal.

12. The method of claim 11, wherein the battery pack connector formation process further comprises:
a negative (-) pack pin connection process of connecting a negative (-) pack pin of the battery pack connector to the negative (-) output terminal of the battery pack; and
a positive (+) pack pin connection process of connecting a positive (+) pack pin of the battery pack connector to the positive (+) output terminal of the battery pack.

13. The method of claim 12, wherein one end of a conductive pattern of the positive (+) pack pin toward the external device has a smaller length than a length of one end of a conductive pattern of the negative (-) pack pin toward the external device.
